# EUROPÄISCHE PATENTSCHRIFT

(11) **EP 0 546 432 B1**
(45) Veröffentlichungstag und Bekanntmachung des Hinweises auf die Patenterteilung: **12.04.1995**
(21) Anmeldenummer: 92120523.3
(22) Anmeldetag: 02.12.1992
(51) Int. Cl.: C04B 35/12

(54) **Verfahren zur Herstellung von feuerfesten Chromoxid-Steinen**
Process for the preparation of chromium oxide refractory bricks
Procédé pour la préparation des briques réfractaires en chrome

(30) Priorität: 07.12.1991 DE 4140417
(43) Veröffentlichungstag der Anmeldung: 16.06.1993
(73) Patentinhaber: DYKO INDUSTRIEKERAMIK GMBH, D-40521 Düsseldorf (DE)
(72) Erfinder: Wächter, Klaus, Dipl.-Ing., W-4044 Kaarst 2 (DE)
(74) Vertreter: Rehberg, Elmar, Dipl.-Ing.

(56) Entgegenhaltungen:
- WO-A-88/00931
- DE-A- 1 927 449
- GB-A- 2 232 413
- US-A- 3 773 531
- DATABASE WPIL Week 8603, Derwent Publications Ltd., London, GB; AN 86-016954 and JP-A-60 239 355

## Beschreibung

Die Erfindung bezieht sich auf ein Verfahren zur Herstellung von feuerfesten Steinen, die als wesentlichen Bestandteil einen hohen Anteil Chromoxid und einen niedrigen Anteil Titanoxid enthalten, indem das Chromoxid und das Titanoxid gemischt, geformt und in reduzierender Atmosphäre gebrannt wird, um eine feste Lösung des Titanoxids in dem Chromoxid zu erreichen, worauf ein Zerkleinern der gebrannten Zwischenkörper erfolgt und aus Siebfraktionen der zerkleinerten Zwischenkörper Formkörper geformt und diese in einem zweiten Brennvorgang zu den feuerfesten Steinen gebrannt werden. Nach dem Verfahren können feuerfeste, poröse Chromoxid-Steine hergestellt werden.

Ein Verfahren der eingangs beschriebenen Art ist aus der japanischen Patentanmeldung Sho-59-94526 bekannt. Dabei wird Chromoxidpulver in einem Anteil von 95 bis 99,5 Gew.-% mit Titanoxidpulver in einem Anteil von 5,0 bis 0,5 Gew.-% gemischt. Aus der Mischung werden Zwischenkörper geformt und in einem ersten Brennvorgang gebrannt. Das Brennen erfolgt in reduzierender Atmosphäre, um eine feste Lösung des Titanoxids in dem Chromoxid zu erreichen. Die gebrannten Zwischenkörper werden anschließend mechanisch zerkleinert, also insbesondere gemahlen. Das gemahlene Material wird in Siebfraktionen aufgeteilt, die dann wieder entsprechend dem Versatz zusammengefügt werden. Aus diesen Material werden die Formkörper geformt, die dann einem zweiten Brennvorgang unterworfen werden. Der zweite Brennvorgang erfolgt in oxidierender Atmosphäre. Die gute vermischung des Chromoxidpulvers mit dem Titanoxidpulver kann durch Sprühtrocknung erreicht werden. Dieses bekannte zweistufige Herstellverfahren hat den Vorteil, daß nach dem zweiten Brennvorgang feuerfeste Steine entstehen, bei denen eine relativ kleine Brennschwindung vorliegt. Diese Brennschwindung beträgt aber immer noch mehr als 1 % und liegt in der Größenordnung von 1,2 bis 2,8 %. Weiterhin ist vorteilhaft, daß ein gutes Gefüge entsteht, in welchem das Titanoxid in den Chromoxid gelöst ist. Nachteilig ist die besonders aufwendige Herstellung in dem zweistufigen Brennverfahren, wobei die Rohstoffe 100 %ig durch den ersten und auch durch den zweiten Brennvorgang geführt werden müssen. Die Temperaturwechselbeständigkeit der hergestellten feuerfesten Steine ist nur bedingt gut. Es treten Risse am Stein bei der ersten Abschreckprobe auf. Werden dagegen Steine aus porösem Material hergestellt, so ist die Temperaturwechselbeständigkeit besser. In dem zweiten Brennvorgang, der bei oxidierender Atmosphäre durchgeführt wird, entsteht nicht nur die Brückenbildung über das Titanoxid mit dem beschriebenen vorteilhaften Gefüge, sondern es entsteht auch ein gewisser Anteil an sechswertigem Chromoxid, welches gesundheitsschädlich ist. Dieser Anteil ist besonders hoch beim Brennen im Temperaturbereich zwischen 1200 und 1600°C, der aber wegen des Gefüges nicht vermieden werden kann.

Aus der Veröffentlichung "Properties of the Chromic Oxide Refractories", Kainarskii and Degtyarva, Ogneupory, Nr. 3, Seiten 36 bis 41, März 1977, ist ein Herstellverfahren für dichte Chromoxidsteine bekannt, bei welchem die geformten Rohstoffe in einem nur einstufigen Brennverfahren in reduzierender Atmosphäre gebrannt werden. Während dieses Brennens findet eine Versinterung statt. Dieses Verfahren ist besonders kostengünstig, weil die Brennkosten nur einmal anfallen. Es können Steine mit hoher Rohdichte erzeugt werden, die also eine geringe offene Porosität aufweisen. Solche Steine besitzen eine besonders hohe Korrosionsbeständigkeit gegenüber Glasschmelzen. Nachteilig an diesem Verfahren ist die hohe Brennschwindung, die in der Größenordnung von 10 bis 15 % liegt. Auch die Temperaturwechselbeständigkeit ist vergleichsweise schlecht.

Das Material weist infolge seiner Dichte eine relativ hohe Wärmeleitfähigkeit auf, so daß seine Anwendung im Ofenbau besondere Isoliermaßnahmen nach sich zieht.

Aus "Low Density and Low Thermal Conductivity Chrome Oxide Refractories for Glass-Melting Furnaces for Fiber Production", Krivoruchko et al, Ogneupory Nr. 4, Seiten 45 bis 49, April 1981, ist weiterhin ein Herstellverfahren für poröse Steine mit niedriger Dichte, verbesserter Temperaturwechselbständigkeit und geringer Wärmeleitfähigkeit bekannt, bei welchem das Material in Verbindung mit einem Ausbrennstoff in einem einstufigen Brennverfahren in oxidierender Atmosphäre gebrannt wird. Dieser Ausbrennstoff hinterläßt Hohlräume und hebt damit die Porosität an, so daß vorteilhaft Steine mit geringer Dichte und hoher Porosität herstellbar sind. Durch das geringe spezifische Gewicht sind diese Steine auch vorteilhaft im Materialverbrauch. Sie können jedoch in unmittelbarer Berührung mit der Glasschmelze nicht angewendet werden, weil der poröse Stein dem Glas nicht genügend Widerstand entgegensetzt.

Der Erfindung liegt die Aufgabe Zugrunde, ein Verfahren der eingangs beschriebenen Art bereitzustellen, mit dem feuerfeste Steine mit vorteilhaft niedriger Brennschwindung und gutem Mikrogefüge herstellbar sind. Dabei geht es darum, die einzelnen Chromoxidkörner miteinander unter einer durchgehenden Brückenbildung aneinander zu binden.

Erfindungsgemäß wird dies bei dem Verfahren der eingangs beschriebenen Art dadurch erreicht, daß die Siebfraktionen der zerkleinerten Zwischenkörper mit nicht-gebranntem Chromoxid vermischt, aus dieser Mischung die Formkörper geformt und diese in dem zweiten Brennvorgang reduzierend gebrannt werden. Damit entsteht ein poröser Chromoxidwerkstoff bzw. feuerfeste Steine aus einem solchen Werkstoff, wobei 18 bis 20 % offene Poren erreichbar sind. Die Steine besitzen eine geringe Brennschwindung, die unter 1 % liegt. Die Steine besitzen eine geringere Wärmeleitfähigkeit und eine erhöhte Gasdurchlässigkeit. Die Korrosionsbeständigkeit gegen Glasschmelzen ist hinreichend gut. Obwohl die damit hergestellten Steine porös sind, können sie überraschenderweise im direkten Glaskontakt eingesetzt werden. Durch den Temperatureinfluß im Bereich der Glasschmelze und die über der Glasschmelze befindliche Atmosphäre tritt ein Materialtransport von der Glaskontaktseite in das Innere der Steine auf, so daß die Porosität an dieser Stelle geschlossen wird. Die damit erreichbare Temperaturwechselbeständigkeit ist besser als bei dichten Chromoxidsteinen. Sechswertiges Chromoxid entsteht hier nur in einem sehr geringen Anteil, da durch die reduzierende Atmosphäre das Chromoxid vor Sauerstoffzutritt geschützt ist. Ein weiterer Vorteil des neuen Verfahrens ist darin zu sehen, daß nur ein Teil des Materials durch beiden Brennstufen hindurchgeführt werden muß. Da beide Brennvorgänge reduzierend durchgeführt werden, ist es möglich, in einem einzigen Ofenbrand gleichzeitig Material, welches dem ersten Brennzyklus unterworfen wird, zusammen mit Material einzusetzen, welches dem zweiten Brennzyklus unterworfen wird. Weiterhin ist es vorteilhaft möglich, Brennbruch von dichten Chromoxid-Steinen und/oder Chromoxid-Steine, die im Glaskontakt waren, zu verarbeiten.

Den Siebfraktionen der zerkleinerten Zwischenkörper kann zusätzlich nicht-gebranntes Titanoxid hinzugefügt werden, so daß also hier nicht-gebranntes Chromoxid und nicht-gebranntes Titanoxid mit dem zerkleinerten Material aus dem Zwischenkörpern zusammengefügt wird. Dieses zusätzlich eingebrachte Material ist im wesentlichen verantwortlich für die Brückenbildung zwischen den Körnern der zerkleinerten Zwischenkörper. Das nicht-gebrannte Chromoxid und ggf. das Titanoxid können in einem Anteil von etwa 10 bis 20 Gew.-% zu den Siebfraktionen der zerkleinerten, gebrannten Zwischenkörper hinzugefügt werden. Damit wird immerhin ein Anteil von etwa 10 bis 20 Gew.-% nur einmal einem Brennvorgang unterworfen.

Die zerkleinerten Zwischenkörper können in Siebfraktionen von bis zu 0,5 mm, 0,5 bis 1,0 mm und 1,0 bis 4,0 mm eingesetzt werden, so daß eine definierte Kornklassifikation vorliegt. Dies ist für den Gefügeaufbau wichtig.

Die zerkleinerten Zwischenkörper können in einer Siebfraktion von bis zu 0,5 mm in Anteil von 15 bis 30 Gew.-%, in einer Siebfraktion von 0,5 bis 1 mm in einem Anteil von 15 bis 30 Gew.-% und in einer Siebfraktion von 1,0 bis 4,0 mm in einem Anteil von 20 bis 60 Gew.-% eingesetzt werden. Diese Angaben sind auf den Gesamtgehalt bezogen.

Das Chromoxid kann in einem Anteil von etwa 96 Gew.-% und das Titanoxid in einem Anteil von etwa 4 Gew.-% vor dem ersten Brennen gemischt werden. Den Siebfraktionen der zerkleinerten Zwischenkörper wird nicht-gebranntes Chromoxid und Titanoxid in etwa gleichem Verhältnis hinzugefügt. Damit ändert sich die prozentuale Zusammensetzung der feuerfesten Steine nicht.

Im Einzelnen kann der zweite Brennvorgang unter oxidierender Atmosphäre während eines Teils der Aufheizung, sodann unter reduzierender Atmosphäre auch während der Temperaturhaltung und unter oxidierender Atmosphäre während der Abkühlung durchgeführt werden. Wichtig ist es, vor allen Dingen während der Temperaturhaltung reduzierend zu brennen, also zu einem Zeitpunkt, in welchem der für die Gefügeausbildung wesentliche Sintervorgang abläuft.

Die Erfindung wird anhand einiger Ausführungsbeispiele weiter erläutert und beschrieben, wobei die wesentlichen Fakten in der nachfolgenden Tabelle zusammengefaßt wird:

| | | | 1 | 2 | 3 | 4 |
|---|---|---|---|---|---|---|
| Cr₂O₃ ZK* | 1 - 4 mm | % | 30 | 30 | 35 | - |
| | 0,5 - 1 mm | % | 25 | 25 | 25 | - |
| | 0 - 0,5 mm | % | 35 | 25 | 20 | - |
| Cr₂O₃ | | % | 10 | 19 | 14 | 96 |
| TiO₂ (Rutil) | | % | - | 1 | 1 | 4 |
| Brennschwindung | | % | 0,5 | 1,0 | 0,8 | 15 |
| offene Porosität | | % | 19,3 | 17.9 | 18,5 | ≦5 |
| Kaltdruckfestigkeit | | MPa | 70 | 110 | 100 | >300 |
| Temperaturwechselbeständigkeit (Luftabschreckung, Anzahl der Abschreckungen) | | | 10 | 5 | 8 | 1 |

| | | | | | | |
|---|---|---|---|---|---|---|
| * ZK = Zwischenkörper | | | | | | |

Bei den Ausführungsbeispiel 1 wurde als ungebranntes Material lediglich 10 % Chromoxid in Pigmentqualität den zerkleinerten Zwischenkörpern hinzugefügt. Die Siebfraktionen der zerkleinerten Zwischenkörper sind angegeben. Die Brennschwindung war hier mit 0,5 % extrem gering, die offene Porosität hoch und somit auch die Temperaturwechselbeständigkeit sehr hoch. Wegen des relativ geringen Anteils von nur 10 % Chromoxid als reaktiven Anteil ergab sich auch eine vergleichsweise grobe Brückenbildung mit einer Kaltdruckfestigkeit von nur 70 MPa.

Bei dem Ausführungsbeispiel 2 war der Anteil der feinen Siebfraktion mit nur 25 % vergleichsweise geringer, jedoch lag der Anteil des nicht-gebrannten Chromoxids bei 19 % und es wurde zusätzlich 1 % Titanoxid hinzugefügt, so daß diese beiden reaktiven Stoffe in einem vergleichsweise hohen Anteil vorkommen. Die Brennschwindung ist zwar am höchsten von den angegebenen Beispielen, jedoch immer noch geringer als im Stand der Technik. Es ergibt sich eine vergleichsweise verbesserte Kaltdruckfestigkeit, während die Temperaturwechselbeständigkeit vergleichsweise schlecht ist, jedoch immer noch wesentlich besser als bei dichten Chromoxid-Steinen, wie sie im direkten Glaskontakt eingesetzt werden.

Das oben unter Nr. 3 in der Tabelle wiedergegebene Ausführungsbeispiel liegt in Mittelbereich, in dem die reaktiven Stoffe insgesamt 15 % ausmachen. Es werden hier eine relativ hohe, grobe Siebfraktion zerkleinerter Zwischenkörper angewandt, so daß die offene Porosität gesteigert ist. Die Kaltdruckfestigkeit ist mit 100 MPa und die Temperaturwechselbeständigkeit mit 8 Abschreckungen relativ hoch.

Bei sämtlichen Ausführungsbeispielen 1 bis 3 wurde zur Herstellung der Zwischenkörper 96 Gew.-% Chromoxid und 4 Gew.-% Titanoxid eingesetzt. Durch die Zerkleinerung dieser Zwischenkörper entstanden dann die angegebenen Siebfraktionen.

Den Ausführungsbeispielen 1 bis 3 nach der Erfindung ist als Vergleichsbeispiel das Beispiel Nr. 4 entgegengesetzt. Dieses zeigt ein einstufiges Brennverfahren für einen dichten Stein, bei dem die Brennschwindung mit 15 % unakzeptabel hoch ist. Damit ergibt sich zwar eine besonders gute Kaltdruckfestigkeit, jedoch ist die Temperaturwechselbeständigkeit entsprechend gering, so daß solche Steine bei Herstellung und Anwendung nur äußerst langsam aufgeheizt bzw. abgekühlt werden dürfen.

## Patentansprüche

1. Verfahren zur Herstellung von feuerfesten Steinen, die als wesentliche Bestandteile einen hohen Anteil Chromoxid und einen niedrigen Anteil Titanoxid aufweisen, indem das Chromoxid und das Titanoxid gemischt, geformt und in reduzierender Atmosphäre gebrannt wird, um eine feste Lösung des Titanoxids in den Chromoxid zu erreichen, worauf ein Zerkleinern der gebrannten Zwischenkörper erfolgt und aus Siebfraktionen der zerkleinerten Zwischenkörper Formkörper geformt und diese in einem zweiten Brennvorgang zu den feuerfesten Steinen gebrannt werden, dadurch gekennzeichnet, daß die Siebfraktionen der zerkleinerten Zwischenkörper mit nicht-gebranntem Chromoxid vermischt, aus dieser Mischung die Formkörper geformt und diese in dem zweiten Brennvorgang reduzierend gebrannt werden.

2. Verfahren nach Anspruch 1, dadurch gekennzeichnet, daß den Siebfraktionen der zerkleinerten Zwischenkörper zusätzlich nicht-gebranntes Titanoxid hinzugefügt wird.

3. Verfahren nach Anspruch 1 oder 2, dadurch gekennzeichnet, daß das nicht-gebrannte Chromoxid und ggf. das Titanoxid in einem Anteil von 10 bis 20 Gew.-% zu den Siebfraktionen der zerkleinerten, gebrannten Zwischenkörper hinzugefügt wird.

4. Verfahren nach Anspruch 1, dadurch gekennzeichnet, daß die zerkleinerten Zwischenkörper in Siebfraktionen von bis zu 0,5 mm, 0,5 bis 1,0 mm und 1,0 bis 4,0 mm eingesetzt werden.

5. Verfahren nach Anspruch 4, dadurch gekennzeichnet, daß die zerkleinerten Zwischenkörper in einer Siebfraktion von bis zu 0,5 mm in einem Anteil von 15 bis 30 Gew.-%, in einer Siebfraktion von 0,5 bis 1,0 mm in einem Anteil von 15 bis 30 Gew.-% und in einer Siebfraktion von 1,0 bis 4,0 mm in einem Anteil von 20 bis 60 Gew.-% eingesetzt werden.

6. Verfahren nach einem oder mehreren der Ansprüche 1 bis 5, dadurch gekennzeichnet, daß das Chromoxid in einem Anteil von etwa 96 Gew.-% und das Titanoxid in einem Anteil von etwa 4 Gew.-% vor dem ersten Brennen gemischt, und den Siebfraktionen der zerkleinerten Zwischenkörper nicht-gebranntes Chromoxid und Titanoxid in etwa gleichem Verhältnis hinzugefügt wird.

7. Verfahren nach Anspruch 1, dadurch gekennzeichnet, daß der zweite Brennvorgang unter oxidierender Atmosphäre während eines Teils der Aufheizung, sodann unter reduzierender Atmosphäre auch während der Tenperaturhaltung und unter oxidierender Atmosphäre während der Abkühlung durchgeführt wird.

8. Verfahren nach Anspruch 1, dadurch gekennzeichnet, daß die Formgebung der Zwischenkörper durch Walzen vorgenommen wird.

## Claims

1. A method for the production of refractory bricks, major components of which are a high proportion of chromium oxide and a relatively small proportion of titanium oxide, wherein the chromium oxide and the titanium oxide are mixed, molded, and fired in a reducing atmosphere in order to achieve a solid solution of the titanium oxide in the chromium oxide, the fired intermediate units are then crushed and other bodies are formed from the sieved fractions of the crushed intermediate units, which are then fired in a second firing operation to produce the refractory bricks, characterized in that the sieved fractions of the crushed intermediate units are mixed with non-fired chromium oxide, the other bodies are then formed from the mixture, and these other bodies are then reductive-fired in the second firing operation.

2. The method of claim 1, characterized in that non-fired titanium oxide is added to the sieved fractions of lthe crushed intermediate units.

3. The method of claim 1 or 2, characterized in that the non-fired chromium oxide and, if applicable, the titanium oxide are added to the sieved fractions of the crushed, fired intermediate units in a proportion of from 10 to 20 % by weight.

4. The method according to claim 1, characterized in that the crushed intermediate units are placed into the kiln in sieved fractions of up to 0.5 mm, 0.5 to 1.0 mm, and 1.0 to 4.0 mm.

5. The method according to claim 4, characterized in that the crushed intermediate units are employed in proportions of from 15 to 30 % by weight for a sieved fraction of up to 0.5 mm, from 15 to 30 % by weight for a sieved fraction of 0.5 to 1.0 mm, and from 20 to 60 % by weight for sieved fraction of 1.0 to 4.0 mm.

6. The method according to one or several of the claims 1 to 5, characterized in that the chromium oxide is mixed in a proportion of approximately 96 % by weight with titanium oxide in a proportion of approximately 4 % by weight prior to the first firing, and non-fired chromium oxide and titanium oxide are added to the sieved fractions of the crushed intermediate units in roughly the same ratio.

7. The method according to claim 1, characterized in that the second firing operation is carried out under an oxidizing atmosphere during part of the heating-up cycle, then under a reducing atmosphere while maintaining the temperature, and under an oxidizing atmosphere during the cooling-down cycle.

8. The method according to claim 1, characterized in that the forming of the intermediate units is carried out by rollers.

## Revendications

1. Procédé de fabrication de briques réfractaires, qui contiennent, comme constituants essentiels, une proportion élevée d'oxyde de chrome et une faible proportion d'oxyde de titane l'oxyde de chrome et l'oxyde de titane étant mélangés, mis en forme et cuits dans une atmosphère réductrice, afin d'obtenir une solution solide de l'oxyde de titane dans l'oxyde de chrome après quoi il est procédé à une fragmentation des corps intermédiaires cuits et à partir de fractions granulométriques des corps intermédiaires fragmentés, il est formé des corps moulés et ceux-ci sont cuits au cours d'une seconde cuisson en briques réfractaires caractérisé en ce que les fractions granulométriques des corps intermédiaires fragmentés sont mélangées à de l'oxyde de chrome non cuit, les corps moulés sont formés dans ce mélanges et ceux-ci sont cuits de manière réductrice au cours de la seconde cuisson.

2. Procédé selon la revendication 1, caractérisé en ce que de l'oxyde de titane non cuit est ajouté en supplément aux fractions granulométriques des corps intermédiaires fragmentés.

3. Procédé selon la revendication 1 ou 2, caractérisé en ce que l'oxyde de chrome non cuit et éventuellement l'oxyde de titane est ajouté a raison de 10 à 20 % en poids aux fractions granulométriques des corps intermédiaires cuits, fragmentés.

4. Procédé selon la revendication 1, caractérisé en ce que les corps intermédiaires fragmentés sont utilisés en fractions granulométriques jusqu'à 0,5 mm, de 0,5 à 1 mm et 1 à 4 mm.

5. Procédé selon la revendication 4, caractérisé en ce que les corps intermédiaires fragmentés sont utilisés en une fraction granulométrique allant jusqu'à 0,5 mm à raison de 15 à 30 % en poids, en une fraction granulométrique de 0,5 à 1 mm à raison de 15 à 30 % en poids et en une fraction granulométrique de 1 à 4 mm, à raison de 20 à 60 % en poids.

6. Procédé selon une ou plusiers des revendications 1 à 5 caractérisé en ce que l'oxyde de chrome est mélangé à raison d'environ 96 % en poids et l'oxyde de titane à raison d'environ 4 % en poids avant le première cuisson, et de l'oxyde de chrome non cuit et de l'oxyde de titane sont ajoutés à peu près dans la même proportion aux fractions granulométriques des corps intermédiaires fragmentés.

7. Procédé selon la revendication 1, caractérisé en ce que la deuxième cuisson est conduite sous une atmosphère oxydante pendant une partie du chauffage puis sous une atmosphère réductrice y compris pendant le maintien de la température et sous une atmosphère oxydante pendant le refroidissement.

8. Procédé selon la revendication 1, caractérisé en ce que le formage des corps intermédiaires s'effectue par laminage.
